# DEMANDE DE BREVET EUROPEEN

(11) **EP 4 607 851 A1**
(43) Date de publication de la demande: **27.08.2025**
(21) Numéro de dépôt: 24305300.6
(22) Date de dépôt: 23.02.2024
(51) Int. Cl.: H04L 9/40

(54) **PROCÉDÉ ET SYSTÈME D'AUTHENTIFICATION D'UN UTILISATEUR SUR UN SERVEUR IDAAS POUR ACCÉDER À UNE APPLICATION**

(71) Demandeur: BULL SAS, 78340 Les Clayes-Sous-Bois (FR)
(72) Inventeur: GUIONNEAU, Christophe, 38000 Grenoble (FR)
(74) Mandataire: IPAZ

(57) **Abrégé**

L'invention concerne un procédé (100) d'authentification d'un utilisateur auprès d'un serveur d'identité as a service, dit serveur IDAAS, en vue d'accéder à une application, ledit procédé (100) comprenant les étapes suivantes :
-authentification (128) dudit utilisateur auprès dudit serveur IDAAS suivant une méthode d'authentification,
- en cas d'authentification réussie, détermination (132) d'une note de confiance en fonction d'une note, dite d'authentification, préalablement associée à ladite méthode d'authentification et représentative d'une confiance accordée à ladite méthode d'authentification, et
-génération (134) d'un message d'authentification comprenant une preuve d'authentification et ladite note de confiance, prévu pour être utilisé par un serveur d'authentification contrôlant l'accès à ladite application.

Elle concerne également un programme d'ordinateur, un serveur IDAAS et un système d'authentification mettant en oeuvre un tel procédé.

## Description

La présente invention concerne un procédé d'authentification d'un utilisateur sur un serveur d'identité as a service, appelé serveur IDAAS, en vue d'accéder à une application. Elle concerne également un serveur et un système mettant en oeuvre un tel procédé.

Le domaine de l'invention est le domaine de l'authentification d'un utilisateur auprès d'un serveur IDAAS, en particulier en vue d'accéder à une ou plusieurs applications locales, ou à une ou plusieurs applications en mode SaaS, également appelées applications web.

### État de la technique

Les applications et les services utilisent de plus en plus une fédération d'identité. En résumé, l'utilisateur s'authentifie auprès d'un serveur d'authentification, également appelé fournisseur d'identité, et obtient une preuve d'authentification. Cette preuve d'authentification est ensuite utilisée pour accéder à plusieurs applications, évitant une authentification individuelle pour chaque application.

L'authentification consiste à vérifier les données fournies par un utilisateur par l'autoriser à utiliser une identité numérique qui lui est associée.

Dans un réseau d'entreprise, c'est l'entreprise qui crée, attribue et gère toutes les identités numériques. La preuve d'authentification peut être obtenue soit au sein du réseau informatique de l'entreprise, soit par un serveur externe au réseau d'entreprise, appelé serveur IDAAS (pour « Identity As A Service »).

On connait aussi des services d'authentification réalisant une authentification sociale, gouvernementaux ou non, par exemple FranceConnect^{®}, SwissID^{®}, Google^{®}, Facebook^{®}, etc. : l'utilisateur crée lui-même son identité numérique lors d'une phase d'enregistrement lui demandant telle ou telle information. Ces services fournissent une fédération d'identité au travers d'APIs d'authentification permettant de véhiculer la preuve d'authentification utilisable par des applications externes.

Tous ces fournisseurs d'identité utilisent des mécanismes d'authentification différents avec une gestion différente des identités numériques, ce qui engendre une différence importante sur le plan de la confiance/sécurité. De plus, il n'existe actuellement aucune solution permettant d'utiliser différents, et potentiellement tous les, fournisseurs d'identité pour l'authentification d'un utilisateur en vue d'accéder à une application.

Un but de la présente invention est de remédier à au moins un des inconvénients précités.

Un autre but de la présente invention est de proposer une solution d'authentification d'un utilisateur auprès d'un serveur IDAAS en vue d'accéder à une application, plus flexible en particulier en termes de fournisseur d'identité.

### Exposé de l'invention

L'invention permet d'atteindre au moins l'un des buts précités par un procédé d'authentification d'un utilisateur auprès d'un serveur d'identité as a service, dit serveur IDAAS, en vue d'accéder à une application, ledit procédé comprenant les étapes suivantes :
- authentification dudit utilisateur auprès dudit serveur IDAAS selon une méthode d'authentification,
- en cas d'authentification réussie, détermination d'une note de confiance en fonction d'une note, dite d'authentification, préalablement associée à ladite méthode d'authentification et représentative d'une confiance accordée à ladite méthode d'authentification, et
- génération d'un message d'authentification comprenant une preuve d'authentification et ladite note de confiance, prévu pour être utilisé par un serveur d'authentification contrôlant l'accès à ladite application.

Ainsi, de manière classique l'invention propose un procédé d'authentification d'un utilisateur par un serveur IDAAS en vue d'accéder à une application. La preuve d'authentification est ensuite utilisée pour accéder à une application, par exemple par un serveur d'authentification gérant l'accès à ladite application.

De manière innovante, l'invention propose de réaliser une authentification en utilisant une méthode d'authentification, parmi plusieurs méthodes d'authentification. Ainsi, l'invention rend possible la mise en oeuvre de différentes méthodes d'authentification au niveau du serveur IDAAS, à savoir une méthode locale gérée par le serveur IDAAS, une méthode d'authentification déléguée gérée par un autre serveur que le serveur IDAAS, tel que par exemple un serveur social, gouvernemental ou non, etc. Par conséquent, l'invention permet de réaliser une authentification plus flexible en termes de fournisseur d'identité et n'est pas limitée à une méthode d'authentification locale gérée par le serveur IDAAS.

Dans le même temps, avec l'invention, la preuve d'authentification est fournie avec une note de confiance représentative de la confiance et/ou de la sécurité accordée à la méthode d'authentification utilisée, ce qui permet une flexibilité du côté du serveur d'authentification car ce dernier a la possibilité d'accepter ou non la preuve d'authentification, en fonction de la note de confiance qui lui est associée.

Suivant des modes de réalisation l'invention, l'application peut être une application locale se trouvant dans un réseau informatique, par exemple un réseau d'entreprise. Dans ce cas, de préférence le serveur d'authentification gérant l'accès à ladite application se trouve dans ledit réseau informatique.

Suivant des modes de réalisation l'invention, l'application peut être une application web, ou une application en mode SaaS, hébergée dans le cloud, par exemple sur un serveur d'application. Dans ce cas, le serveur d'authentification gérant l'accès à ladite application peut se trouver sur ledit serveur ou sur un autre serveur en communication avec ledit serveur d'application.

Suivant des modes de réalisation, l'authentification de l'utilisateur auprès du serveur IDAAS peut être réalisée selon l'une quelconque des méthodes suivantes :
- une méthode, dite locale, gérée par l'IDAAS : dans ce cas, le fournisseur d'identité est le serveur IDAAS ;
- une méthode, dite déléguée, gérée par un serveur d'identité tiers, autre que le serveur IDAAS.

Le serveur tiers peut être tout type de serveur fournisseur d'identité, par exemple Azure AD.

Le serveur tier peut être un serveur d'authentification fédérée, par exemple tout type de serveur d'identité supportant les protocoles OIDC/SAML.

Le serveur tiers peut être un autre serveur IDAAS.

Le serveur tiers peut être un serveur d'authentification social, par exemple Google ^{®}, LinkedIn ^{®}, Facebook ^{®}, FranceConnect ^{®}, etc.

Ainsi, l'invention permet d'utiliser une variété de serveurs d'identité, ou de services d'identité, pour authentifier l'utilisateur et générer une preuve d'authentification en cas d'authentification réussie. Bien entendu, ces méthodes d'authentification ne sont pas équivalentes en termes de sécurité/confiance, du point de vue l'IDAAS. Ainsi, ces méthodes d'authentification ont des notes d'authentification différentes.

Suivant des modes de réalisation, la méthode d'authentification peut être choisie par l'utilisateur lorsqu'il est sur le serveur IDAAS.

Suivant des modes de réalisation, la méthode d'authentification peut être choisie par le serveur IDAAS en fonction :
- de l'application à laquelle l'utilisateur souhaite accéder,
- de la localisation depuis laquelle l'utilisateur souhaite accéder à l'application,
- d'une méthode d'enregistrement utilisée pour enregistrer l'utilisateur auprès du serveur IDAAS, etc.

Si la méthode d'authentification choisie est une méthode d'authentification locale, l'authentification de l'utilisateur est réalisée par l'IDAAS selon une ou plusieurs techniques d'authentification locales : identifiant/mot de passe, identification multifactorielle, etc.

Si la méthode d'authentification choisie est une méthode d'authentification déléguée, l'utilisateur est redirigé vers les serveur tiers réalisant ladite authentification déléguée. L'authentification de l'utilisateur est réalisée par ledit serveur tiers selon une ou plusieurs techniques d'authentification : identifiant/mot de passe, identification multifactorielle, etc. En cas d'authentification réussie, le serveur tiers génère une preuve d'authentification, dite preuve d'authentification déléguée, qu'il transmet au serveur IDAAS.

La preuve d'authentification déléguée peut être utilisée comme preuve d'authentification fournie par le serveur IDAAS dans le message d'authentification. Alternativement, le serveur IDAAS peut générer une preuve d'authentification à partir de ladite preuve d'authentification déléguée reçue du serveur tiers.

Suivant des modes de réalisation, le message d'authentification peut comprendre :
- la note d'authentification, et/ou
- au moins une caractéristique relative à la méthode d'authentification.

Cela permet de mieux renseigner le serveur d'authentification gérant l'accès à l'application en ce qui concerne le processus d'authentification, avec directement la note d'authentification associée à la méthode d'authentification et/ou au moins une caractéristique de la méthode d'authentification utilisée.

Au moins une caractéristique de la méthode d'authentification peut être tout type de caractéristique relative à ladite méthode d'authentification ou au serveur ayant réalisé ladite authentification, telle que par exemple :
- un identifiant de ladite méthode d'authentification,
- une technique d'identification utilisée pour authentifier l'utilisateur,
- un identifiant du serveur réalisant ladite méthode d'authentification,
- une localisation du serveur réalisant ladite méthode d'authentification,
- etc.

Suivant des modes de réalisation, pour au moins une méthode d'authentification, la note d'authentification qui lui est associée peut être modifiable manuellement, par exemple par un administrateur du serveur IDAAS.

Cette modification peut être réalisée au travers d'une console d'administration par exemple. Ainsi, il est possible d'attribuer une note d'authentification manuellement et de modifier ladite note d'authentification, par exemple lorsque le serveur tiers évolue, ou fait évoluer la méthode d'authentification qu'il réalise.

Suivant des modes de réalisation, l'utilisateur peut être préalablement enregistré auprès dudit IDAAS selon une méthode d'enregistrement à laquelle est associée une note, dite d'enregistrement, représentative d'une confiance accordée à ladite méthode d'enregistrement, la note de confiance étant en outre calculée en fonction de ladite note d'enregistrement.

Ainsi, l'invention propose d'enregistrer l'utilisateur auprès du serveur IDAAS suivant plusieurs méthodes d'enregistrement, ce qui permet une plus grande flexibilité pour enregistrer l'utilisateur, et donc une plus grande flexibilité de l'authentification proposée par la présente invention.

La, ou chaque, méthode d'enregistrement est de préférence associée à une notre d'enregistrement représentative de la confiance, et/ou de la sécurité, associée à ladite méthode d'enregistrement. La note de confiance transmise au serveur d'authentification gérant l'accès à l'application est en outre en fonction de ladite note d'enregistrement, ce qui permet une flexibilité du côté du serveur d'authentification car ce dernier a la possibilité d'accepter ou non la preuve d'authentification, en fonction de la note de confiance qui lui est associée dont le calcul dépend aussi de la note d'enregistrement.

Suivant des modes de réalisation, le procédé selon l'invention peut en comprendre une étape d'enregistrement de l'utilisateur sur le serveur IDAAS, selon une méthode d'enregistrement à laquelle est associée une note d'enregistrement représentative de la confiance/sécurité accordée à ladite méthode d'enregistrement.

L'enregistrement d'un utilisateur auprès du serveur IDAAS peut être réalisée selon :
- une méthode, dite locale, proposé par l'IDAAS : dans ce cas, l'utilisateur est enregistré directement auprès du serveur IDAAS ; ou
- une méthode, dite déléguée, proposée par un serveur tiers : dans ce cas l'utilisateur est enregistré auprès dudit serveur tiers et ses données d'enregistrement sont communiquées audit serveur IDAAS par le serveur tiers.

Suivant des exemples de réalisation non limitatifs et données à titre d'illustration seulement, l'enregistrement de l'utilisateur auprès du serveur IDAAS peut être réalisée selon l'une quelconque des méthodes suivantes :
- enregistrement par un administrateur auprès dudit serveur IDAAS : dans ce cas l'administrateur d'un réseau informatique, ou de l'application, enregistre l'utilisateur auprès du serveur IDAAS en lui créant une identité numérique, ou en communiquant une identité numérique existant de l'utilisateur au serveur IDAAS ;
- provisionnement par API : une identité numérique existante de l'utilisateur est communiquée au serveur IDAAS par API ;
- auto-enregistrement par certificat : une identité numérique existante de l'utilisateur est communiquée au serveur IDAAS par utilisation d'un certificat ;
- synchronisation d'identité depuis le système d'information d'un réseau informatique, selon toute technique de synchronisation connue ;
- auto-enregistrement de l'utilisateur auprès dudit serveur IDAAS : l'utilisateur accède à une page internet du serveur IDAAS et crée son profil suivant une ou plusieurs techniques d'enregistrement proposée(s) et gérée(s) localement par l'IDAAS ;
- auto-enregistrement de l'utilisateur au travers d'un service d'authentification sociale : dans ce cas, l'utilisateur accède à une page internet du serveur IDAAS et choisit une méthode d'enregistrement déléguée gérée par un service d'identité social. Il est alors redirigé vers le serveur social gérant ledit servie d'identité : sur une page internet dudit serveur social, il crée son profil suivant une ou plusieurs techniques d'enregistrement proposées et gérées par ledit serveur social.

Bien entendu, ces techniques d'enregistrement ne sont pas équivalentes en termes de sécurité/confiance, du point de vue l'IDAAS. Ainsi, ces techniques d'enregistrement ont des notes d'enregistrement différentes.

Suivant des modes de réalisation, la méthode d'enregistrement peut être choisie par l'utilisateur lorsqu'il est sur le serveur IDAAS.

Suivant des modes de réalisation, la méthode d'enregistrement peut être choisie par l'IDAAS en fonction :
- de l'application à laquelle l'utilisateur souhaite accéder,
- de la localisation depuis laquelle l'utilisateur souhaite accéder à l'application,
- d'une méthode d'authentification que l'utilisateur souhaite utiliser pour s'authentifier, etc.

Si la méthode d'enregistrement choisie est une méthode d'enregistrement locale, l'enregistrement de l'utilisateur est réalisé auprès de l'IDAAS selon une ou plusieurs techniques d'enregistrement locales.

Si la méthode d'enregistrement choisie est une méthode d'enregistrement déléguée réalisé par un serveur tiers, l'utilisateur est redirigé vers ledit serveur tiers réalisant ledit enregistrement délégué. L'enregistrement de l'utilisateur est réalisé par ledit serveur tiers selon une ou plusieurs techniques d'enregistrement. En cas d'enregistrement réussi, le serveur tiers génère une identité numérique, et éventuellement un profil utilisateur, qu'il transmet au serveur IDAAS. L'identité numérique de l'utilisateur, et éventuellement le profil de l'utilisateur, est mémorisé dans le serveur IDAAS.

Suivant des modes de réalisation, le procédé selon l'invention peut en outre comprendre, après l'enregistrement, une étape de création d'un profil utilisateur pour ledit utilisateur, sur le serveur IDAAS. Ainsi, lorsque l'utilisateur s'est enregistré avec succès, un profil est créé et lui est associé sur le serveur IDAAS. Ce profil peut être utilisé pour réaliser différentes fonctions.

En particulier, pour au moins un utilisateur, le profil utilisateur peut comprendre au moins une des données suivantes :
- la note d'enregistrement, associée à la méthode d'enregistrement utilisée,
- la méthode d'enregistrement utilisée pour enregistrer ledit utilisateur,
- l'identifiant d'un administrateur ayant enregistré ledit utilisateur, ou ayant validé l'enregistrement dudit utilisateur, le cas échéant.

Suivant des modes de réalisation, le message d'authentification peut comprendre :
- la note d'enregistrement, et/ou
- au moins une caractéristique relative à la méthode d'enregistrement.

Cela permet de mieux renseigner le serveur d'authentification gérant l'accès à l'application, avec directement la note d'enregistrement associée à la méthode d'enregistrement et/ou au moins une caractéristique de la méthode d'enregistrement utilisée.

Au moins une caractéristique de la méthode d'enregistrement peut être tout type de caractéristique relative à ladite méthode d'enregistrement, ou au serveur ayant réalisé ledit enregistrement, ou encore à l'administrateur ayant réalisée l'enregistrement, telle que par exemple :
- un identifiant de ladite méthode d'enregistrement,
- une technique d'enregistrement utilisée pour enregistrer l'utilisateur,
- un identifiant du serveur réalisant ladite méthode d'enregistrement,
- un identifiant de l'administrateur ayant enregistré l'utilisateur,
- etc.

Suivant des modes de réalisation, pour au moins une méthode d'enregistrement, la note d'enregistrement qui lui est associée peut être modifiable manuellement, par exemple par un administrateur du serveur IDAAS.

Cette modification peut être réalisée au travers d'une console d'administration par exemple. Ainsi, il est possible d'attribuer une note d'enregistrement manuellement et de modifier ladite note d'enregistrement, par exemple lorsque le serveur tiers évolue, ou fait évoluer la méthode d'enregistrement qu'il réalise.

La note de confiance peut être calculée en utilisant une relation prédéterminée.

La relation prédéterminée peut être une relation mathématique prenant en entrée la note d'authentification, et le cas échéant la note d'enregistrement. Par exemple, la note de confiance peut être une moyenne des notes d'authentification et d'enregistrement, éventuellement pondérées de manière différentes.

La relation prédéterminée peut être une table, ou une matrice de correspondance, prenant en entrée la note d'authentification, et le cas échéant la note d'enregistrement. Par exemple, la relation prédéterminée peut être une matrice à deux entrées : une pour la note d'authentification et une autre pour la note d'enregistrement, et indiquant la note de confiance.

Le procédé d'authentification selon l'invention peut en outre comprend en outre une étape de détermination d'une décision relative à l'accès à l'application en utilisant la preuve d'authentification.

Lors de cette étape le message d'authentification peut être utilisé par le serveur d'authentification gérant l'accès à l'application pour autoriser ou non l'accès à l'application.

Suivant des exemples de réalisation, l'accès à l'application peut être déterminée en fonction de la note de confiance, et en particulier par comparaison de ladite note à une première valeur seuil, pour déterminer si ladite note est supérieure ou égale à ladite première valeur seuil, et optionnellement de :
- la note d'authentification, et en particulier par comparaison de ladite note d'authentification à une deuxième valeur seuil, pour déterminer si ladite note d'authentification est supérieure ou égale à ladite deuxième valeur seuil ; et/ou
- la note d'enregistrement, et en particulier par comparaison de ladite note d'enregistrement à une troisième valeur seuil, pour déterminer si ladite note d'enregistrement est supérieure ou égale à ladite troisième valeur seuil.

Lorsque la condition, ou toutes les conditions, d'accès fixée(s) pour l'accès à l'application est/sont satisfaite(s), le serveur d'application peut autoriser l'accès de l'utilisateur à l'application. Dans le cas contraire, l'accès est refusé.

Suivant un autre aspect de la présente invention, il est proposé un programme d'ordinateur comprenant des instructions informatiques, qui lorsqu'elles sont exécutées par ordinateur, mettent en oeuvre les étapes du procédé selon l'invention.

Le programme d'ordinateur peut être en langage machine, en C, C++, JAVA, Python, et plus généralement tout type de langage informatique.

Le programme d'ordinateur peut être un unique programme, ou un ensemble de plusieurs programmes. Par exemple, le programme d'ordinateur peut comprendre un module serveur IDAAS exécuté au niveau du serveur IDAAS, et éventuellement :
- un premier module client exécuté au niveau du serveur d'authentification ; et/ou
- un deuxième module client exécuté au niveau du serveur tiers.

Suivant un autre aspect de la présente invention, il est proposé un serveur d'identité as a service, serveur IDAAS, configuré pour réaliser une authentification d'un utilisateur par le procédé selon l'invention.

Suivant un autre aspect de la présente invention, il est proposé un système d'accès à une application, ledit système comprenant :
- au moins un appareil utilisateur,
- un serveur hébergeant au moins une application, et
- un serveur IDAAS ;
configurés pour mettre en oeuvre toutes les étapes du procédé selon l'invention.

### Description des figures et modes de réalisation

D'autres avantages et caractéristiques apparaîtront à l'examen de la description détaillée d'un mode de réalisation nullement limitatif, et des dessins annexés sur lesquels :
- la FIGURE 1 est une représentation schématique d'un exemple de réalisation non limitatif d'un procédé selon l'invention,
- la FIGURE 2 est une représentation schématique d'un exemple de réalisation non limitatif d'un serveur selon l'invention, et
- la FIGURE 3 est une représentation schématique d'un exemple de réalisation non limitatif d'un système selon l'invention.

Il est bien entendu que les modes de réalisation qui seront décrits dans la suite ne sont nullement limitatifs. On pourra notamment imaginer des variantes de l'invention ne comprenant qu'une sélection de caractéristiques décrites par la suite isolées des autres caractéristiques décrites, si cette sélection de caractéristiques est suffisante pour conférer un avantage technique ou pour différencier l'invention par rapport à de l'état de la technique antérieur. Cette sélection comprend au moins une caractéristique de préférence fonctionnelle sans détails structurels, ou avec seulement une partie des détails structurels si cette partie est uniquement suffisante pour conférer un avantage technique ou pour différencier l'invention par rapport à l'état de la technique antérieure.

Sur les figures, les éléments communs à plusieurs figures conservent la même référence.

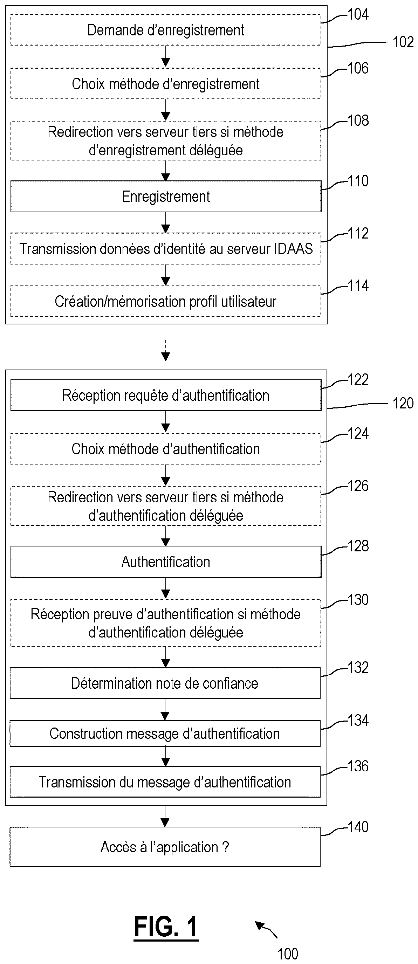

La FIGURE 1 est une représentation schématique d'un exemple de réalisation non limitatif d'un procédé selon l'invention.

Le procédé 100, représenté sur la FIGURE 1, peut être mis en oeuvre pour authentifier un utilisateur en vue d'autoriser ledit utilisateur à accéder à une application, qui peut être
- une application, dite locale, hébergée sur un serveur d'application se trouvant dans un réseau informatique, par exemple un réseau informatique d'une entreprise, ou
- une application web, ou application en mode SaaS, hébergée sur un serveur d'application se trouvant dans le cloud.

Le procédé 100 comprend une phase 102, optionnelle, d'enregistrement d'un utilisateur auprès d'IDAAS. Cette phase est optionnelle car elle peut ne pas faire partie du procédé 100 et être réalisée en amont dudit procédé.

La phase d'enregistrement 102 peut comprendre une étape optionnelle 104 d'émission d'une demande d'enregistrement de la part de l'utilisateur. Lors de cette étape 104, l'utilisateur peut accéder à la page Internet du serveur IDAAS en vue de sélectionner une méthode d'enregistrement. Cette étape 104 est optionnelle car l'enregistrement peut être initiée/réalisée différemment, comme il sera décrit dans la suite.

Lors d'une étape optionnelle 106, une méthode d'enregistrement peut être choisie parmi plusieurs méthodes d'enregistrement configurées/disponibles au niveau du serveur IDAAS. La méthode d'enregistrement peut être choisie par :
- par l'utilisateur ;
- par le serveur IDAAS, par exemple en fonction de l'application, du lieu depuis lequel l'utilisateur s'enregistre, etc. ;
- d'un administrateur d'un réseau informatique auquel appartient l'utilisateur ;
- etc.

Cette étape est optionnelle car l'enregistrement peut être réalisée directement selon une méthode imposée, par exemple par API, ou certificat, ou encore synchronisation permettant de transférer vers le serveur IDAAS les identités des utilisateurs d'un réseau informatique par exemple.

Dans tous les cas, l'enregistrement de l'utilisateur est réalisé soit :
- par une méthode, dite locale, mise en oeuvre par l'IDAAS ;
- par une méthode, dite déléguée, mise en oeuvre par un autre serveur, dit serveur tiers, tels que par exemple un serveur social ou un autre serveur IDAAS, et plus généralement tout autre serveur réalisant une fédération d'identité.

Lorsque la méthode d'enregistrement choisie est une méthode déléguée, lors d'une étape optionnelle 108, l'utilisateur est redirigé vers le serveur tiers pour réaliser l'enregistrement.

Lors d'une 110, l'utilisateur est enregistré, soit sur le serveur IDAAS selon une méthode d'enregistrement locale, soit sur un serveur tiers selon une méthode d'enregistrement déléguée. Cet enregistrement peut être réalisée selon l'une des méthodes suivantes :
- enregistrement par un administrateur auprès dudit serveur IDAAS : dans ce cas l'administrateur d'un réseau informatique, ou de l'application, enregistre l'utilisateur auprès du serveur IDAAS en lui créant une identité numérique, ou en communiquant une identité numérique existante de l'utilisateur au serveur IDAAS : c'est une méthode d'enregistrement locale gérée par le serveur IDAAS ;
- provisionnement par API : une identité numérique existante de l'utilisateur est communiquée au serveur IDAAS par API : c'est une méthode d'enregistrement locale gérée par le serveur IDAAS ;
- auto-enregistrement par certificat : une identité numérique existante de l'utilisateur est communiquée au serveur IDAAS par utilisation d'un certificat : c'est une méthode d'enregistrement locale gérée par l'IDAAS ;
- synchronisation d'identité depuis le système d'information d'un réseau informatique, selon toute technique de synchronisation connue : c'est une méthode d'enregistrement locale gérée par le serveur IDAAS ;
- auto-enregistrement de l'utilisateur auprès dudit serveur IDAAS : l'utilisateur accède à une page internet du serveur IDAAS et crée son profil suivant une ou plusieurs techniques d'enregistrement proposées et gérées localement par le serveur IDAAS : c'est une méthode d'enregistrement locale gérée par le serveur IDAAS ;
- auto-enregistrement de l'utilisateur auprès d'un service d'authentification sociale : dans ce cas, l'utilisateur accède à une page internet du serveur IDAAS et choisit une méthode d'enregistrement déléguée gérée par un service d'identité social. Il est alors redirigé vers le serveur social gérant ledit servie d'identité : sur une page internet dudit serveur social, il crée son profil suivant une ou plusieurs techniques d'enregistrement proposées et gérées par ledit serveur social : c'est une méthode d'enregistrement déléguée ; et
- auto-enregistrement au travers d'un fournisseur d'identité externe : c'est une méthode d'enregistrement déléguée.

Une note d'enregistrement est associée à chaque méthode d'enregistrement et représente une confiance/sécurité accordée à ladite méthode d'enregistrement.

La note d'enregistrement associée à chaque méthode d'enregistrement est connue de l'IDAAS car elle est préalablement renseignée, par exemple par un administrateur de l'IDAAS lors de la configuration de laite méthode d'enregistrement sur le serveur IDAAS. La note d'enregistrement associée à chaque méthode d'enregistrement peut être changée, par exemple manuellement, par l'administrateur du serveur IDAAS.

Lorsque l'enregistrement est réalisé par un serveur tiers, c'est-à-dire selon une méthode d'enregistrement déléguée, lors d'une étape optionnelle 112, l'identité numérique de l'utilisateur, et optionnellement une partie ou la totalité des données de profil de l'utilisateur, est/sont transmise(s) au serveur IDAAS.

Après l'étape d'enregistrement, lors d'une étape 114 optionnelle, un profil utilisateur est créé et mémorisé dans le serveur IDAAS. Ce profil utilisateur mémorise au moins l'identité numérique de l'utilisateur, et la note d'enregistrement associée à la méthode d'enregistrement utilisée pour enregistrer l'utilisateur.

Le profil utilisateur peut mémoriser d'autres données, telles que par exemple une caractéristique de la méthode d'enregistrement utilisée, un identifiant d'un administrateur ayant enregistré l'utilisateur, la ou les applications auxquelles l'utilisateur a accès, pour au moins une application un droit d'accès accordé à l'utilisateur pour ladite application, etc.

Le procédé 100 comprend en outre une ou plusieurs itérations d'une phase 120 d'authentification de l'utilisateur auprès d'un serveur IDAAS en vue d'accéder à l'application.

La phase d'authentification 120 peut être réalisée tout de suite après la phase d'enregistrement 102. Alternativement, la phase d'authentification 120 peut être réalisée bien après la phase d'enregistrement 102.

La phase d'authentification 120 comprend une étape 122 lors de laquelle une requête d'authentification de l'utilisateur est reçue par le serveur IDAAS. Suivant des modes de réalisation, la requête peut être formulée par l'utilisateur directement sur une page Internet du serveur IDAAS. Suivant d'autres modes de réalisation, la requête d'authentification peut être formulée par un serveur d'authentification gérant l'accès à l'application, par exemple suite à une demande de connexion de l'utilisateur à ladite application. Bien entendu ces exemples ne sont nullement limitatifs.

La phase d'authentification 120 comprend une étape 124, optionnelle, de choix de méthode d'authentification.

Lors de l'étape optionnelle 124, une méthode d'authentification peut être choisie parmi plusieurs méthodes d'authentification configurées/disponibles au niveau de l'IDAAS. La méthode d'authentification peut être choisie :
- par l'utilisateur ;
- par l'IDAAS, par exemple en fonction de l'application à laquelle l'utilisateur souhaite accéder, du lieu depuis lequel l'utilisateur fait la demande d'authentification, etc. et plus généralement d'au moins un paramètre relatif aux conditions d'authentification ;
- d'un administrateur de l'application à laquelle l'utilisateur souhaite accéder ;
- d'un administrateur d'un réseau informatique auquel appartient l'utilisateur ;
- etc.

Cette étape 124 est optionnelle car l'authentification peut être réalisée directement selon une méthode d'authentification imposée, par exemple par un administrateur de l'application parmi les méthodes d'authentification proposées/disponibles sur le serveur IDAAS.

Dans tous les cas, l'authentification de l'utilisateur est réalisée soit :
- par une méthode d'authentification, dite locale, mise en oeuvre par le serveur IDAAS ;
- par une méthode d'authentification, dite déléguée, mise en oeuvre par un autre serveur, dit serveur tiers, tels que par exemple un serveur social ou un autre serveur IDAAS, et plus généralement tout autre serveur réalisant une fédération d'identité.

Une note d'authentification est associée à chaque méthode d'authentification et représente une confiance/sécurité accordée à ladite méthode d'authentification.

La note d'authentification associée à chaque méthode d'authentification est connue de l'IDAAS car elle est préalablement renseignée, par exemple par un administrateur de l'IDAAS lors de la configuration de ladite méthode d'authentification sur le serveur IDAAS. La note d'authentification associée à chaque méthode d'authentification peut être changée, par exemple manuellement, par l'administrateur du serveur IDAAS.

Lorsque la méthode d'authentification choisie est une méthode déléguée, lors d'une étape optionnelle 126, l'utilisateur est redirigé vers le serveur tiers pour réaliser l'authentification.

Lors d'une 128, l'utilisateur s'authentifie, soit sur le serveur IDAAS selon une méthode d'authentification locale, soit sur un serveur tiers selon une méthode d'authentification déléguée. Cette authentification peut être réalisée selon toutes les techniques d'authentification connues, telles que par exemple par la fourniture d'un identifiant et d'un mot de passe, par authentification multifactorielle, etc.

En cas d'authentification réussie, et lorsque l'authentification est réalisée le serveur IDAAS, c'est-à-dire selon une méthode d'authentification locale, le serveur IDAAS génère une preuve d'authentification à l'étape 128.

En cas d'authentification réussie, et lorsque l'authentification est réalisée par un serveur tiers, c'est-à-dire selon une méthode d'authentification déléguée, une preuve d'authentification, dite déléguée, est générée par ledit serveur tiers. Cette preuve d'authentification est transmise au serveur IDAAS lors d'une étape optionnelle 130. Le serveur IDAAS peut utiliser cette preuve d'authentification déléguée comme preuve d'authentification à transmettre au serveur d'authentification gérant l'accès à l'application. Alternativement, lors de cette étape 130, le serveur IDAAS génère sa propre preuve d'authentification à partir de la preuve d'authentification déléguée reçue du serveur tiers.

Dans tous les cas, la preuve d'authentification peut être toute preuve d'authentification connue de la personne du métier et utilisée pour la fédération d'identité, telle que par exemple un jeton d'authentification, un certificat d'authentification, une clef d'authentification, etc.

Lors d'une étape 132, une note de confiance est calculée, par le serveur IDAAS, en fonction de la note d'authentification associée à la méthode d'authentification utilisée, et optionnellement de la note d'enregistrement associée à la méthode d'enregistrement utilisée pour enregistrer l'utilisateur.

La note de confiance peut être calculée suivant toute relation prédéterminée. Par exemple, la note de cofinance est donnée par une matrice à deux entrées, une pour la note d'authentification et une autre pour la note d'enregistrement, et une sortie indiquant la note de confiance.

Lors d'une étape 134, un message d'authentification est généré. Ce message d'authentification comprend la preuve d'authentification et la note de confiance. Le message d'authentification peut en outre comprendre l'une quelconque, ou une combinaison quelconque d'au moins deux, des données suivantes :
- la note d'authentification,
- la note d'enregistrement,
- au moins une caractéristique relative à la méthode d'authentification,
- au moins une caractéristique relative à la méthode d'enregistrement.

Le message d'authentification est transmis au serveur d'authentification gérant l'accès à l'application, lors d'une étape 136

Le procédé 100 peut ensuite comprendre une étape 140 optionnelle de prise de décision concernant l'accès à l'application, en fonction du message d'authentification reçu. Plus particulièrement, lors de cette étape le message d'authentification est testé pour déterminer si un accès est accordé ou non à l'utilisateur.

Lors de cette étape 140 le message d'authentification peut être testé par le serveur d'authentification gérant l'accès à l'application pour autoriser ou non l'accès à l'application. Le test comprend une comparaison de la note de confiance à une première valeur seuil, pour déterminer si ladite note est supérieure ou égale à ladite première valeur seuil. Optionnellement, le test peut comprendre :
- une comparaison de la note d'authentification à une deuxième valeur seuil pour déterminer si ladite note d'authentification est supérieure ou égale à ladite deuxième valeur seuil ; et/ou
- une comparaison de la note d'enregistrement à une troisième valeur seuil, pour déterminer si ladite note d'enregistrement est supérieure ou égale à ladite troisième valeur seuil.

Lorsque la condition, ou toutes les conditions, testée(s) est/sont satisfaite(s), le serveur d'application autorise l'accès de l'utilisateur à l'application. Dans le cas contraire, l'accès est refusé.

La phase d'authentification 120 peut être répétée autant de fois que souhaitée, pour :
- la même application, ou pour différentes applications ; et/ou
- le même utilisateur et/ou pour différents utilisateurs.

L'application peut être tout type d'application telle qu'une application bureautique, une application mail, une application bancaire, etc.

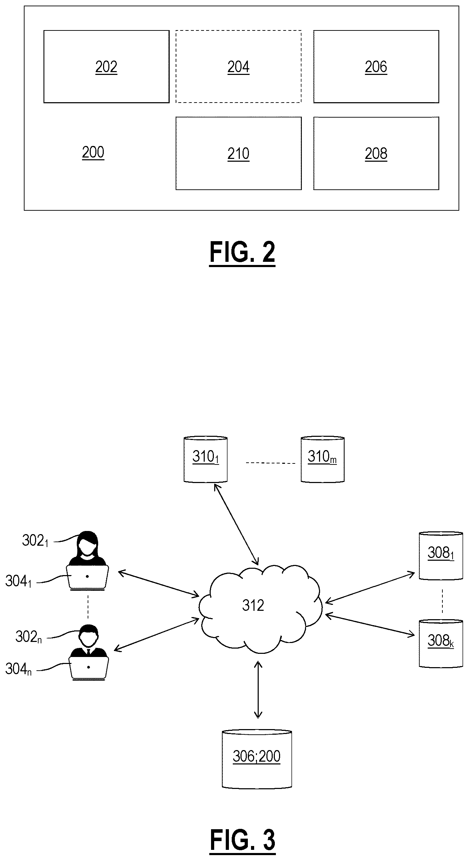

La FIGURE 2 est une représentation schématique d'un exemple de réalisation non limitatif d'un serveur IDAAS selon l'invention.

Le serveur IDAAS 200, représenté sur la FIGURE 2, peut être utilisé pour l'authentification d'un utilisateur en vue d'autoriser ledit utilisateur à accéder à une application.

Le serveur IDAAS 200, représenté sur la FIGURE 2, peut être utilisé pour mettre en oeuvre un procédé selon l'invention et en particulier, le procédé 100 de la FIGURE 1.

Le serveur IDAAS 200 comprend un module 202 d'administration dudit serveur IDAAS, par un ou plusieurs administrateurs, en local ou à distance. Le module d'administration permet de gérer le fonctionnement du serveur IDAAS. Optionnellement, le module d'administration permet d'attribuer, et optionnellement de modifier :
- la note d'authentification associée à une méthode d'authentification et/ou
- le cas échéant, la note d'enregistrement associée à une méthode d'enregistrement.
Bien entendu, le module d'administration peut être utilisé pour d'autres opérations que celle décrites plus haut, par exemple pour configurer une méthode d'authentification, pour configurer une méthode d'enregistrement, etc.

Le serveur IDAAS 200 comprend un module optionnel 204 d'enregistrement d'utilisateurs. Ce module d'enregistrement 204 peut être configuré pour mettre oeuvre, au niveau du serveur IDAAS un enregistrement d'un utilisateur sur ledit serveur IDAAS. En particulier, le module d'enregistrement 204 est configuré pour mettre en oeuvre :
- au moins une méthode d'enregistrement locale, c'est-à-dire une méthode d'enregistrement réalisée par le serveur IDAAS 200 ; et
- au moins une méthode d'enregistrement déléguée, c'est-à-dire faisant intervenir un serveur tiers lors de l'enregistrement d'un utilisateur, et permettant l'enregistrement de l'utilisateur à partir de données reçues dudit serveur tiers.
En particulier, le module d'enregistrement 204 peut être agencé/configuré pour mettre en oeuvre la phase d'enregistrement 102 du procédé 100.

Bien entendu, le module d'enregistrement 204 peut être utilisé pour d'autres opérations que celles décrites ci-dessus.

Le serveur IDAAS 200 comprend un module 206 d'authentification d'utilisateurs. Ce module d'authentification 206 peut être configuré pour mettre oeuvre, au niveau du serveur IDAAS, une authentification d'un utilisateur. En particulier, le module d'authentification 206 est configuré pour mettre en oeuvre :
- au moins une méthode d'authentification locale, c'est-à-dire une méthode d'authentification réalisée par le serveur IDAAS 200 ; et
- au moins une méthode d'authentification déléguée, c'est-à-dire faisant intervenir un serveur tiers lors de l'authentification d'un utilisateur, et permettant l'authentification de l'utilisateur à partir d'une preuve d'authentification reçue dudit serveur tiers.
En particulier, le module d'authentification 206 peut être agencé/configuré pour mettre en oeuvre les étapes 122-130 du procédé 100.

Bien entendu, le module d'authentification 206 peut être utilisé pour réaliser en outre d'autres opérations que celle décrites ci-dessus.

Le serveur IDAAS 200 comprend un module 208 de détermination/calcul de la note de confiance associée à la preuve d'authentification, en fonction :
- de la note d'authentification associée à la méthode d'authentification,
- et optionnellement de la note d'enregistrement associée à la méthode d'enregistrement.
En particulier, le module 208 peut être agencé/configuré pour mettre en oeuvre l'étape 132 du procédé 100.

Le serveur IDAAS 200 comprend un module 210 de construction et de transmission d'un message d'authentification suite à une authentification. En particulier, le module 210 peut être agencé/configuré pour mettre en oeuvre les étapes 134-136 du procédé 100.

Bien entendu, le serveur IDAAS 200 peut comprendre d'autres composants/modules que ceux décrits ici.

Au moins un des modules 202-210 peut être un module matériel, tel qu'un processeur, une puce électronique, un calculateur, etc.

Au moins un des modules 202-210 peut être un module logiciel, tel qu'un programme d'ordinateur, une application, etc.

Au moins un des modules 202-210 peut être une combinaison d'au moins un module matériel et d'au moins un module logiciel.

Au moins un des modules 202-210 peut être un module individuel et dédié.

Au moins deux des modules 202-210 peuvent être intégrés au sein d'un même module individuel et dédié.

La FIGURE 3 est une représentation schématique d'un exemple de réalisation non limitatif d'un système selon l'invention.

Le système 300, représenté sur la FIGURE 3, peut être utilisé pour l'authentification d'utilisateurs 302₁-302ₙ pour l'accès desdits utilisateurs à une ou plusieurs applications hébergées sur un serveur d'application, avec leurs appareils utilisateurs 304₁-304ₙ.

Le système 300, représenté sur la FIGURE 3, peut être utilisé pour mettre en oeuvre un procédé selon l'invention, et en particulier le procédé 100 de la FIGURE 1.

Le système 300 comprend un serveur IDAAS 306. Le serveur IDAAS 306 peut être un serveur IDAAS selon l'invention, et en particulier le serveur IDAAS 200 de la FIGURE 2.

Le système 300 comprend en outre un ou plusieurs serveurs tiers 308₁-308ₖ pouvant être utilisés pour réaliser :
- un enregistrement d'un utilisateur, dans le cadre d'une méthode d'enregistrement déléguée ; et/ou
- une authentification d'un utilisateur, dans le cadre d'une méthode d'authentification déléguée.

Le système 300 comprend en outre un ou plusieurs serveurs d'applications 310₁-310ₘ, chacun hébergeant une ou plusieurs applications, et auxquelles les utilisateurs 302₁-302ₙ souhaitent accéder. Au moins un serveur d'application 310i peut être localisé dans le cloud. Au moins un serveur d'application peut être localisé dans un réseau informatique dans lequel se trouve au moins un des utilisateurs 302₁-302ₙ.

Le serveur IDAAS 306 est en communication avec un ou plusieurs des composants du système 300 au travers d'un réseau de communication 312, tel que le réseau Internet.

Bien entendu, le système 300 peut comprendre d'autres composants que ceux décrits ici.

L'ensemble des exemples qui viennent d'être décrits sont donnés à titre d'exemples particuliers uniquement et l'invention n'est pas limitée à ces exemples. De nombreuses variantes peuvent être imaginées aux exemples donnés ci-dessus sans sortir du cadre de l'invention telle que définie dans les revendications.

## Revendications

1. Procédé (100) d'authentification d'un utilisateur auprès d'un serveur (200;302) d'identité as a service, dit serveur IDAAS, en vue d'accéder à une application, ledit procédé (100) comprenant les étapes suivantes :
- authentification (128) dudit utilisateur auprès dudit serveur IDAAS (200;302) selon une méthode d'authentification,
- en cas d'authentification réussie, détermination (132) d'une note de confiance en fonction d'une note, dite d'authentification, préalablement associée à ladite méthode d'authentification et représentative d'une confiance accordée à ladite méthode d'authentification, et
- génération (134) d'un message d'authentification comprenant une preuve d'authentification et ladite note de confiance, prévu pour être utilisé par un serveur d'authentification contrôlant l'accès à ladite application.

2. Procédé (100) selon l'une quelconque des revendications précédentes, **caractérisé en ce que** l'authentification de l'utilisateur auprès du serveur IDAAS (200;302) est réalisée selon l'une quelconque des méthodes suivantes :
- une méthode, dite locale, gérée par ledit serveur IDAAS ;
- une méthode, dite déléguée, gérée par un serveur d'identité tiers, autre que le serveur IDAAS.

3. Procédé (100) selon l'une quelconque des revendications précédentes, **caractérisé en ce que** le message d'authentification comprend en outre :
- la note d'authentification, et/ou
- au moins une caractéristique relative à la méthode d'authentification.

4. Procédé (100) selon l'une quelconque des revendications précédentes, **caractérisé en ce que**, pour au moins une méthode d'authentification, la note d'authentification qui lui est associée est modifiable manuellement par un administrateur.

5. Procédé (100) selon l'une quelconque des revendications précédentes, **caractérisé en ce que** l'utilisateur est préalablement enregistré auprès dudit IDAAS (200;302) selon une méthode d'enregistrement à laquelle est associée une note, dite d'enregistrement, représentative d'une confiance accordée à ladite méthode d'enregistrement, la note de confiance étant en outre calculée en fonction de ladite note d'enregistrement.

6. Procédé (100) selon l'une quelconque des revendications précédentes, **caractérisé en ce qu'**il comprend en outre une étape (110) d'enregistrement de l'utilisateur sur le serveur IDAAS.

7. Procédé (100) selon l'une quelconque des revendications 5 ou 6, **caractérisé en ce que** l'enregistrement de l'utilisateur auprès du serveur IDAAS (200;302) est réalisée selon l'une quelconque des méthodes suivantes :
- enregistrement par un administrateur auprès dudit serveur IDAAS (200;302) ;
- provisionnement par API ;
- auto-enregistrement par certificat ;
- synchronisation d'identité depuis un système d'information d'un réseau informatique ;
- auto-enregistrement de l'utilisateur auprès dudit serveur IDAAS (200;302) ;
- auto-enregistrement de l'utilisateur au travers d'un service d'authentification sociale.

8. Procédé (100) selon l'une quelconque des revendications 5 à 7, **caractérisé en ce qu'**il comprend, après l'enregistrement, une étape (114) de création d'un profil utilisateur pour ledit utilisateur sur le serveur IDAAS, ledit profil comprenant au moins une des données suivantes :
- la note d'enregistrement,
- la méthode d'enregistrement utilisée pour enregistrer ledit utilisateur,
- l'identifiant d'un administrateur ayant enregistré ledit utilisateur, ou ayant validé l'enregistrement dudit utilisateur, le cas échéant.

9. Procédé (100) selon l'une quelconque des revendications 5 à 8, **caractérisé en ce que** la preuve d'authentification comprend en outre :
- la note d'enregistrement, et/ou
- au moins une caractéristique relative à la méthode d'enregistrement.

10. Procédé (100) selon l'une quelconque des revendications 5 à 9, **caractérisé en ce que**, pour au moins une méthode d'enregistrement, la note de confiance d'enregistrement qui lui est associée est modifiable manuellement par un administrateur.

11. Procédé (100) selon la revendication précédente, **caractérisé en ce que** la note de confiance est calculée en utilisant une relation prédéterminée.

12. Procédé (100) selon l'une quelconque des revendications précédentes, **caractérisé en ce qu'**il comprend en outre une étape (140) de détermination d'une décision relative à l'accès à l'application, en utilisant la preuve d'authentification.

13. Programme d'ordinateur comprenant des instructions informatiques, qui lorsqu'elles sont exécutées par ordinateur, mettent en oeuvre les étapes du procédé (100) selon l'une quelconque des revendications précédentes.

14. Serveur (200) d'identité as a service, serveur IDAAS, configuré pour réaliser une authentification d'un utilisateur par le procédé (100) selon l'une quelconque des revendications 1 à 12.

15. Système (300) d'accès à une application hébergée sur un serveur d'application (310₁-310ₘ), ledit système (300) comprenant :
- au moins un appareil utilisateur (304₁-304ₙ),
- un serveur (310₁-310ₖ) hébergeant au moins une application, et
- un serveur IDAAS (302;200) ;
configurés pour mettre en oeuvre toutes les étapes du procédé (100) selon l'une quelconque des revendications 1 à 12.
